# EUROPÄISCHE PATENTANMELDUNG

(11) **EP 2 397 305 A2**
(43) Veröffentlichungstag der Anmeldung: **21.12.2011**
(21) Anmeldenummer: 11168368.6
(22) Anmeldetag: 01.06.2011
(51) Int. Cl.: B29C 49/12, B29C 49/06, B29C 49/36

(54) **Blasformmaschine mit Reckstange**

(30) Priorität: 18.06.2010 DE 102010024277
(71) Anmelder: Krones AG, 93073 Neutraubling (DE)
(72) Erfinder: Höllriegl, Thomas, 93158 Teublitz (DE); Brunner, Andreas, 93089 Aufhausen (DE)
(74) Vertreter: Bittner, Bernhard

(57) **Zusammenfassung**

Eine Vorrichtung (100) zum Umformen von Kunststoffvorformlingen (110) zu Kunststoffbehältnissen mit einer Vielzahl von Blasstationen (108), welche jeweils einen Hohlraum (104) aufweisen, in dem die Kunststoffvorformlinge zu Kunststoffbehältnissen umformbar sind, wobei diese Blasstationen (108) auf einem beweglichen Träger (106) angeordnet ist und jeweils eine Reckstange (112) aufweisen, welche die Kunststoffbehältnisse in deren Längsrichtung durch eine Bewegung in einer Dehnungsrichtung (D1) dehnt, wobei eine fluidbetätigte Antriebseinrichtung (14) zum Antrieb der Reckstange (112) in der Dehnungsrichtung (D1) vorgesehen ist. Erfindungsgemäß weist die Vorrichtung (100) eine stationär angeordnete Führungskurve (20) auf, durch welche die Reckstange (112) in Abhängigkeit von einer Bewegung der Blasstation (8) entgegen der Dehnungsrichtung (D1) bewegbar ist, wobei wenigstens ein Abschnitt dieser Führungskurve (20) verstellbar ist, und bevorzugt durch diese Verstellung eine Abhängigkeit der Bewegung der Reckstange von der Bewegung der Blasstation (108) veränderbar ist.

## Beschreibung

Die vorliegende Erfindung bezieht sich auf eine Blasmaschine zum Umformen von Kunststoffvorformlingen zu Kunststoffbehältnissen. Derartige Vorrichtungen sind aus dem Stand der Technik bekannt. Üblicherweise weisen derartige Blasmaschinen eine Vielzahl von Blasstationen auf, innerhalb denen Hohlräume ausgebildet sind, in denen Kunststoffvorformlinge durch Beaufschlagung mit Druckluft zu Kunststoffbehältnissen umformbar sind. Dabei ist es auch bekannt, dass derartige Blasstationen Reckstangen aufweisen, welche die Kunststoffvorformlinge während des Expansionsvorgangs in ihrer Längsrichtung dehnen. Für diese Reckstangen sind die unterschiedlichsten Antriebskonzepte bekannt. So ist denkbar, dass die Reckstangen mittels elektromotorischer Antriebe oder mittels Kurven gesteuert werden. Auch ist es bekannt, dass diese Reckstangen von pneumatischen Antrieben betätigt werden. Dazu kann sowohl ein Ausfahren der Reckstange, welches den Kunststoffvorformling dehnt, als auch ein Einfahren der Reckstange pneumatisch angetrieben sein.

Derartige Blasmaschinen haben jedoch im Stand der Technik einen vergleichsweise hohen Energieverbrauch, wobei sich in der Energiebilanz auch die Antriebseinrichtungen zum Betätigen der Reckstange bemerkbar machen.

Der vorliegenden Erfindung liegt daher die Aufgabe zugrunde, die Energiebilanz derartiger Blasmaschinen zu verbessern. Dies wird erfindungsgemäß durch den Gegenstand des unabhängigen Anspruchs erreicht. Vorteilhafte Ausführungsformen und Weiterbildungen sind Gegenstand der Unteransprüche.

Eine erfindungsgemäße Vorrichtung zum Umformen von Kunststoffvorformlingen zu Kunststoffbehältnissen weist eine Vielzahl von Blasstationen auf, welche jeweils einen Hohlraum aufweisen, in dem die Kunststoffvorformlinge zu Kunststoffbehältnissen umformbar sind. Dabei sind diese Blasstationen auf einem beweglichen Träger angeordnet, und weisen jeweils eine Reckstange auf, welche die Kunststoffbehältnisse in deren Längsrichtung durch eine Bewegung der Reckstange in einer Dehnungsrichtung dehnt. Dabei ist eine Antriebseinrichtung zum Antrieb der Reckstange in der Dehnungsrichtung vorgesehen.

Erfindungsgemäß weist die Vorrichtung eine stationär angeordnete Führungskurve auf, durch welche die Reckstange in Abhängigkeit von einer Bewegung der Blasstation entgegen der Dehnungsrichtung bewegbar ist, wobei wenigstens ein Abschnitt dieser Führungskurve verstellbar ist und bevorzugt durch diese Verstellung die Abhängigkeit der Bewegung der Reckstange (insbesondere entgegen der Dehnungsrichtung) von der Bewegung der Blasstation veränderbar ist. Unter einer Veränderung der Abhängigkeit der Bewegung der Reckstange von der Bewegung der Blasstation wird verstanden, dass sich für eine bestimmte Reckstange der Zusammenhang zwischen deren Position und der Position der Blasstation, der diese Reckstange zugeordnet ist, wenigstens abschnittsweise ändert. Damit ändert sich dieser Zusammenhang durch die Verstellung einer geometrischen Position der Führungskurve gegenüber einem Bewegungspfad der einzelnen Blasstationen. Bevorzugt ändert sich eine Position in einer senkrecht zu einer Bewegungsebene der Blasstationen stehenden Richtung.

Es wird daher erfindungsgemäß vorgeschlagen, dass die Bewegung der Reckstange entgegen der Dehnungsrichtung, d. h. von einer vollkommenen ausgefahrenen Position in eine zurückgefahrene Position durch die besagte Führungskurve bewirkt wird. So kann beispielsweise die Reckstange einen Reckschlitten mit einer Führungsrolle aufweisen, wobei diese Führungsrolle gegenüber der Führungskurve beweglich ist und bei einer Bewegung der Blasstation auf diese Weise eine rückziehende Bewegung der Reckstange erreicht wird. Vorzugsweise wird daher eine Bewegung der Reckstange in der Dehnungsrichtung durch eine pneumatische und/oder elektrische Antriebseinrichtung angetrieben und die Bewegung entgegen der Dehnungsrichtung durch die Führungskurve.

Diese Führungskurve wird im Folgenden auch als Anlaufsegment bezeichnet. Derartige Anlaufsegmente können verwendet werden, um die Reckstange bzw. den kurvengesteuerten Reckschlitten inklusive der Reckstange von der unteren Endlage, d. h. im Reckanschlag, wieder in die obere Endlage, d. h. die Ausgangsposition, zu bringen.

Die Position dieser Führungskurve ist dabei beispielsweise von der Länge der herzustellenden Behälter abhängig. Falls lange Behältnisse verwendet werden, ist eine tiefere Position des Anlaufsegments nötig, falls kurze Flaschen hergestellt werden sollen, eine entsprechend höhere Position. Daher ist es hilfreich, wenn die Position des Anlaufsegments bzw. der Führungseinrichtung bei einem Sortenwechsel verändert werden kann.

Bei einer vorteilhaften Ausführungsform ist wenigstens eine Antriebseinrichtung und sind besonders bevorzugt alle Antriebseinrichtungen fluidbetätigte und insbesondere pneumatisch betätigte Antriebseinrichtungen. Bei einer weiteren vorteilhaften Ausführungsform ist wenigstens eine Antriebseinrichtung eine elektrisch betriebene Antriebseinrichtung und weist insbesondere einen Elektromotor auf. Bei diesem Elektromotor kann es sich sowohl um einen Linearmotor als auch um einen Drehantrieb handeln. Durch ein Rückführen der Reckstange entgegen der Dehnungsrichtung kann ein derartiger Elektromotor als Generator wirken und auf diese Weise elektrische Energie erzeugen.

Bei einer weiteren vorteilhaften Ausführungsform stehen die (pneumatischen) Antriebseinrichtungen wenigstens zweier Blasstationen zumindest zeitweise in Fluidkommunikation (insbesondere Druckluftkommunikation) miteinander. So ist es denkbar, dass beim Rückführen einer Reckstange in ihre Ausgangsposition die Druckluft an eine weitere Blasstation abgegeben werden kann, wodurch bei dieser weiteren Blasstation wiederum die Reckstange nach unten bewegt werden kann.

Vorteilhaft weist die Vorrichtung ein Reservoir für das Fluid zum Betätigen der Antriebseinrichtungen auf, und dieses Reservoir steht in Strömungsverbindung mit allen Antriebseinrichtungen zum Betätigen der Reckstange. So kann es sich bei sämtlichen Antriebseinrichtung jeweils um pneumatische Antriebe handeln, die von einem gemeinsamen Ringkanal mit Druckluft versorgt werden. Falls nun die Führungskurve eine Reckstange zurück in die Ausgangsposition gedrängt wird, kann die dabei entstehende Druckluft in den besagten Ringkanal gespeist werden und durch den entstehenden Überdruck wiederum eine weitere Reckstange nach unten bewegt werden.

Vorzugsweise steht das Fluid bzw. die Luft in dem bevorzugten Reservoir unter einem Überdruck, der im Arbeitsbetrieb der Vorrichtung bevorzugt auch beibehalten wird.

Auf diese Weise ist mit Verwendung der besagten Führungskurve ein Recycling von Druckluft möglich.

Vorteilhaft weist die Vorrichtung ein Betätigungselement zum Verstellen des Abschnitts der Führungskurve auf und eine Bewegung dieses Betätigungselements ist an eine Bewegung des besagten Abschnitts der Führungskurve gekoppelt.

Grundsätzlich wäre es auch möglich, dass das Anlaufsegment durch Schraubeinrichtungen, wie beispielsweise Sechskantschrauben an einem Träger angeschraubt ist und eine Verstellung dadurch erfolgt, dass diese Schrauben gelöst werden und anschließend die Führungskurve verschoben wird. In diesem Fall können jedoch gegebenenfalls die Zugänglichkeit dieser Schrauben und die Möglichkeit der präzisen Verstellung problematisch sein. Durch das Vorsehen eines Betätigungselements, wie beispielsweise einer Drehspindel oder eines Drehhebels, kann gewährleistet sein, dass eine sehr genaue Verstellung der Führungskurve bzw. des Anlaufsegments ermöglicht wird. Eine Bewegung dieses Betätigungshebels ist dabei in einer vorgegebenen Weise, beispielsweise durch die Verwendung einer Drehspindel an die Bewegung des Anlaufsegements gekoppelt.

Vorteilhaft ist die Führungskurve an einer Halteeinrichtung entlang eines vorgegebenen Verschiebewegs verschiebbar angeordnet. Bei dieser Halteeinrichtung kann es sich beispielsweise um eine sogenannte Fangkurve handeln, die auch aus dem Stand der Technik bekannt ist. Diese Fangkurve wiederum kann ein Langloch aufweisen, in dem die Führungskurve verschiebbar angeordnet ist. Durch dieses Langloch wird auch ein eindeutig definierter Verschiebeweg für die Führungskurve vorgegeben. Vorzugsweise ist die Führungskurve derart an der Fangkurve angeordnet, dass diese geometrisch ineinander übergehen, dass also eine an der Führungskurve sich entlang bewegende Führungsrolle glatt bzw. stoßfrei in die Fangkurve übergeht.

Bei einer weiteren vorteilhaften Ausführungsform ist die Führungskurve gegenüber der Halteeinrichtung arretierbar. So wäre es beispielsweise möglich, dass die Führungskurve mit Schraubverbindungen gegenüber der Halteinrichtung arretiert wird. Es wäre jedoch auch möglich, dass zum Halten der Führungskurve Klemmzylinder Einsatz finden. Dies wird unten unter Bezugnahme auf die Figuren genauer erläutert.

Bei einer weiteren vorteilhaften Ausführungsform ist die Führungskurve entlang eines Bewegungspfades der Blasstationen verstellbar. Dies bedeutet, dass die Blasstationen sich entlang eines vorgegebenen Bewegungspfades, beispielsweise bei Anordnung an einem Blasrad entlang einer kreisförmigen Bahn bewegen und die Führungskurve entlang dieser Bahn, bzw. einer hierzu konzentrischen Bahn verstellbar ist.

Bei einer weiteren vorteilhaften Ausführungsform weist die Vorrichtung eine Anzeigeeinrichtung auf, um eine für eine Position der Führungskurve charakteristische Information auszugeben. So kann beispielsweise eine Skala im Bereich des Betätigungselements vorgesehen sein. Es wäre jedoch auch möglich, dass eine entsprechende Anzeigeeinrichtung bzw. Skala an der Halteeinrichtung oder auch der Führungskurve vorgesehen ist, mittels derer die exakte geometrische Position der Führungskurve bestimmt werden kann.

Bei einer weiteren vorteilhaften Ausführungsform ist die Halteeinrichtung eine weitere Führungskurve, welche wenigstens zeitweise zum Bewegen der Reckstange dient. Diese sogenannte Fangkurve kann auch im Stand der Technik dann Einsatz finden, wenn aus bestimmten Gründen eine Rückbewegung der Reckstange nicht stattfindet, beispielsweise weil der zugehörige Pneumatikzylinder defekt ist. In diesem Falle ist dennoch Sorge dafür zu tragen, dass die Reckstange zurückgezogen wird, da falls die Reckstange in dem Behältnis verbleibt und dieses anschließend aus der Blasform entnommen wird, schwerwiegende Beschädigungen der Anlage die Folge sein können.

Bei einer weiteren vorteilhaften Ausführungsform ist eine Arretierung der Führungskurve gegenüber der Halteeinrichtung durch eine Ventileinrichtung gesteuert.

Weiterhin ist es möglich, dass die Führungskurve (insbesondere auch bei gelöster Arretierung) gegenüber der Halteeinrichtung vorgespannt ist. Durch dieses Vorspannen kann erreicht werden, dass auch falls eine Klemmung versehentlich gelockert ist, noch ausreichender Reibschluss vorhanden ist, damit auch nach Lösen der eigentlichen Arretierung ein versehentliches Verstellen im Betrieb ausgeschlossen ist.

Vorteilhaft ist die Führungskurve gekrümmt ausgebildet, weist also insbesondere nicht nur eine gekrümmte Kante auf, entlang derer sich eine Kurvenrolle bewegen kann, sondern ist darüber hinaus auch noch in einer Richtung gekrümmt, welche sich senkrecht zu dem Verlauf der besagten Kante erstreckt. Diese Krümmung kann dabei an die Krümmung einer Bewegungsbahn der einzelnen Blasstationen angepasst sein. Mit anderen Worten ist hier die Führungskurve ist gekrümmt und radial zum Blasmaschinenmittelpunkt entlang der gekrümmten Kurve verstellbar.

Die vorliegende Erfindung ist weiterhin auf ein Verfahren zum Betreiben einer Vorrichtung zum Umformen von Kunststoffvorformlingen zu Kunststoffbehältnissen gerichtet, wobei die Vorrichtung eine Vielzahl von Blasstationen, welche jeweils einen Hohlraum aufweisen, in dem die Kunststoffvorformlinge zu Kunststoffbehältnissen umgeformt werden, aufweist. Diese Blasstationen sind auf einem beweglichen Träger angeordnet und weisen jeweils eine Reckstange auf, welche die Kunststoffbehältnisse in deren Längsrichtung durch eine Bewegung in einer Dehnungsrichtung dehnt. Dabei werden die Reckstangen von einer Antriebseinrichtung in der Dehnungsrichtung angetrieben werden, und die Vorrichtung ist auf unterschiedliche Behältnisse umstellbar und bei einer Umstellung der Maschine wird zumindest eine Bodenform einer Blasstation, welche zum Erzeugen der Kunststoffbehältnisse dient, gegen eine andere Bodenform ausgewechselt.

Erfindungsgemäß weist die Vorrichtung eine stationär angeordnete Führungskurve auf, durch welche die Reckstange in Abhängigkeit von einer Bewegung der Blasstation entgegen der Dehnungsrichtung bewegt wird und bei der Umstellung der Maschine wird diese Führungskurve verstellt wird. Durch diese Umstellung kann die Vorrichtung insbesondere auf unterschiedliche Höhen der herzustellenden Behältnisse aber ggfs, auch auf unterschiedliche Höhen der verwendeten Kunststoffvorformlinge umgestellt werden.

Vorteilhaft wird die Führungskurve in Abhängigkeit von einer Höhe der Bodenform verstellt wird. Die besagte Bodenform ist dabei vorteilhaft Bestandteil einer Blasform, welche daneben auch zwei Seitenteile aufweisen kann. Diese Seitenteile und die Bodenform bzw. deren jeweilige Innenoberflächen bilden dabei bevorzugt den oben erwähnten Hohlraum aus und die Kunststoffvorformlinge werden gegen diese Innenwandung zu den Kunststoffbehältnissen expandiert.

Weitere Vorteile und Ausführungsformen ergeben sich aus den beigefügten Figuren:
Darin zeigen:
- Fig. 1a, 1 b: Darstellungen einer Vorrichtung nach dem Stand der Technik;
- Fig. 2: eine Detailansicht einer erfindungsgemäßen Vorrichtung;
- Fig. 3: eine weitere Detailansicht der Vorrichtung aus Fig. 2;
- Fig. 4: eine weitere Detailansicht der Vorrichtung aus Fig. 2;
- Fig. 5: eine weitere Detailansicht der Vorrichtung Fig. 2;
- Fig. 6a-6c: drei Detailaufstellungen einer erfindungsgemäßen Betätigung für die Führungskurve.

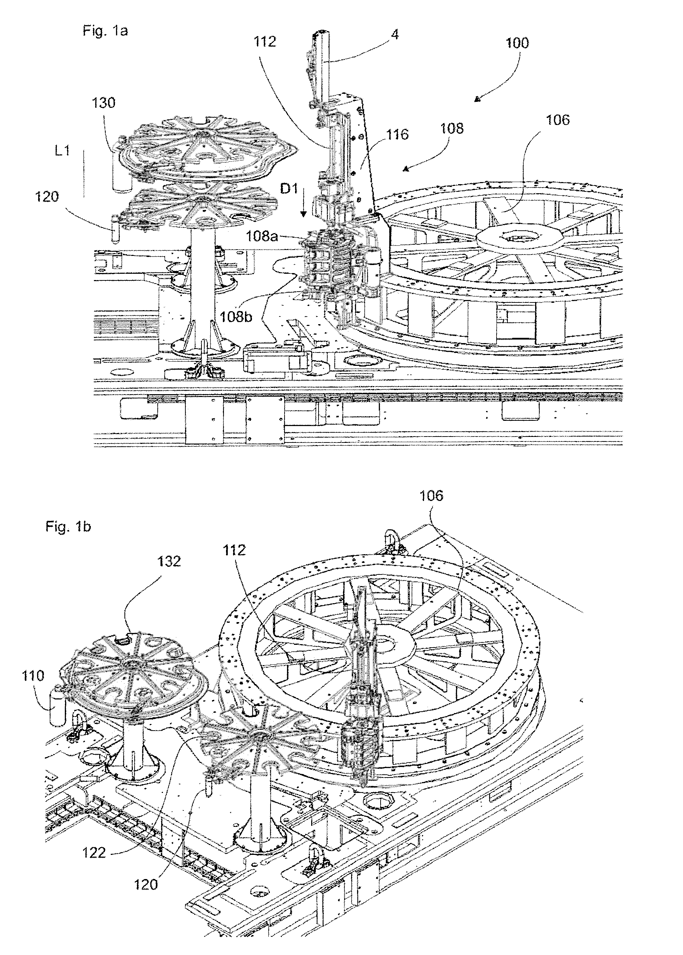

Fig. 1 a und 1 b zeigen zwei Darstellungen einer Vorrichtung 100 zum Umformen von Kunststoffvorformlingen zu Kunststoffbehältnissen. Dabei ist ein drehbares Blasrad 106 vorgesehen, an dem eine Vielzahl von Blasstationen 108 (hier nur eine Blasstation 108 gezeigt) angeordnet ist. Dieses Blasrad 106 dreht sich gemeinsam mit den einzelnen Blasstationen 108. Während der Umdrehung werden die Kunststoffvorformlinge 120, die dem Blasrad 106 und den Blasstationen 108 mittels eines Zuführrades 122 zugeführt werden zu Kunststoffbehältnissen umgeformt. Diese Kunststoffbehältnisse 130 werden über ein Abführrad 132 wieder von der Vorrichtung abgeführt.

Das Bezugszeichen 14 in Fig. 1a zeigt eine Antriebseinrichtung, welche zum Betätigen der Reckstange 112, d. h. zum Bewegen der Reckstange 112 in der Dehnungsrichtung D1 dient. Das Bezugszeichen 116 bezieht sich auf einen Träger, an dem die Reckstangenanordnung angeordnet ist. Das Bezugszeichen L1 kennzeichnet eine Längsrichtung des Behältnisses entlang derer sich auch die Reckstange 112 bewegt. Das Bezugszeichen 108a bezieht sich auf einen Seitenteilträger der Blasstation an dem ein nicht gezeigtes Seitenteil der zugehörigen Blasform angeordnet ist und das Bezugszeichen 108b auf einen Bodenteilträger, an dem eine nicht gezeigte Bodenform der Blasform angeordnet ist.

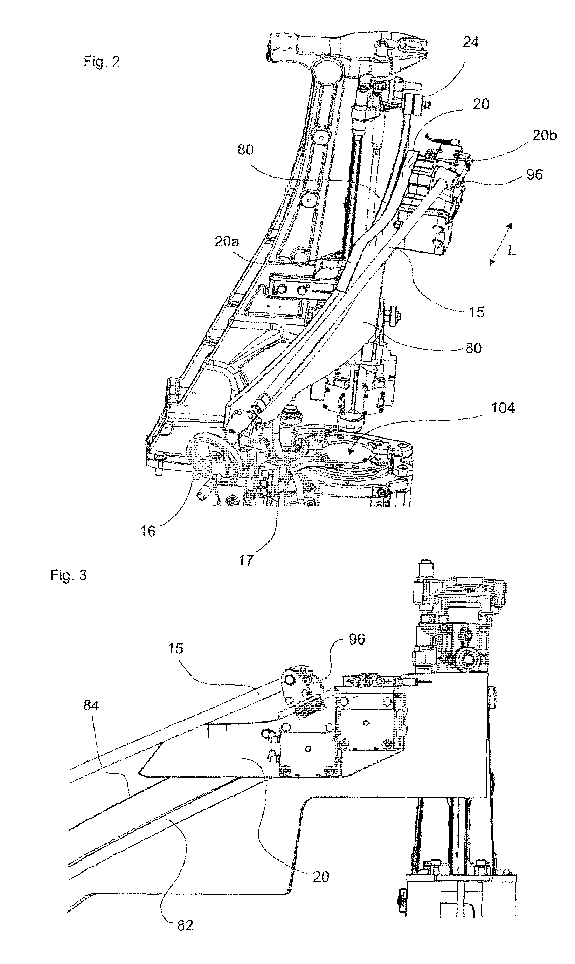

Fig. 2 zeigt eine erste Darstellung zur Veranschaulichung der Erfindung. Dabei ist eine Führungskurve 20 dargestellt, welche verstellbar ausgeführt ist. Die Führungskurve 20 ist dabei in ihrer Gesamtheit an einer Halteeinrichtung 80 angeordnet und dieser Halteeinrichtung gegenüber beweglich. Die Halteeinrichtung selbst ist stationär angeordnet, sodass sich die einzelnen Blasstationen 8 gegenüber dieser Halteeinrichtung 80 und damit auch gegenüber der Führungskurve 20 bewegen. Die Halteeinrichtung kann selbst als Fangkurve dienen.

Das Bezugszeichen 104 kennzeichnet einen Hohlraum, der innerhalb der einzelnen Blasstationen ausgebildet wird, um dort Kunststoffvorformlinge zu Kunststoffbehältnissen zu expandieren. Das Bezugszeichen 15 kennzeichnet eine Spindel, welche mit einem Betätigungselement 16 drehbar ist um auf diese Weise einen Endabschnitt 96 bzw. ein Halteelement 96 in der Längsrichtung L dieser Spindel zu verschieben. An diesem Halteelement 96 ist auch die Führungskurve bzw. das Anlaufsegment 20 angeordnet um auf diese Weise ebenfalls (gegenüber der Halteeinrichtung) verschoben werden zu können.

Man erkennt insbesondere in Fig. 2, dass die Führungskurve bzw. das Anlaufsegment 20 zwei Abschnitte 20a und 20b mit unterschiedlicher Steigung hat. Der Abschnitt 20a des Anlaufsegments 20 weist dabei eine stärkere Steigung auf, als der Abschnitt 20b. Der Abschnitt 20b ist jedenfalls in seinem Endabschnitt an eine Steigung der Halteeinrichtung 80 angepasst. Die Führungsrolle 24 ist dabei derart ausgeführt, dass sie sowohl auf der Halteeinrichtung 80, als auch auf der Führungskurve bzw. dem Anlaufsegment 20 abrollen kann. Insbesondere durch die Halteeinrichtung wird die Kurvenrolle und damit der Reckschlitten mit der Reckstange in die obere Anschlagsstellung verbracht. Die Halteeinrichtung 80 bzw. die weitere Kurve kann sich auch noch in horizontaler Richtung fortsetzen, um die Reckstange in der oberen Position zu halten.

Fig. 3 zeigt eine Seitenansicht der in Fig. 2 gezeigten Vorrichtung. Man erkennt, dass die Spindel 15 an der Halteeinrichtung 96 angelenkt ist und daher schwenkbar dieser gegenüber ist. Das Bezugszeichen 82 bezieht sich auf ein Langloch, welches in der Halteeinrichtung 80 ausgebildet ist und bezüglich dessen das Anlaufsegment bewegbar ist. Dieses Langloch 82 verläuft dabei parallel zu einer Oberkante 84 der Halteeinrichtung, welche hier als weitere Führungskurve wirkt.

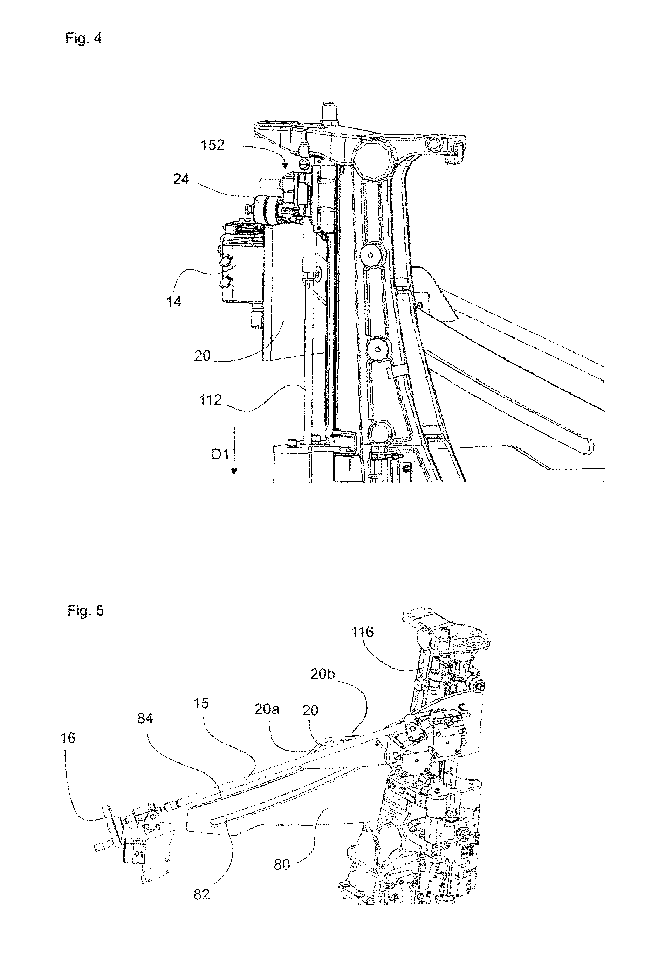

Fig. 4 und 5 zeigen eine weitere Darstellung der in Fig. 2 gezeigten Anordnung. Hier erkennt man auch die Führungsrolle 24, die mit der Reckstange 112 mittelbar verbunden ist, bzw. die an einem Reckschlitten 132 angeordnet ist um diesen zu bewegen. Die Betätigung der Reckstange 112 in der Richtung D1 erfolgt, wie oben erwähnt, über die pneumatische Antriebseinrichtung 14. Wie in Fig. 5 gezeigt, erfolgt die Verstellung des Anlaufsegments über die Gewindespindel 15, die bei gelöster Klemmung zwischen dem Anlaufsegment 20 und der Halteeinrichtung 80 einstellbar ist. Um eine reproduzierbare Einstellung zu gewährleisten, ist ein Stellungsanzeiger bzw. ein Zählwerk angebracht. Die Bedienelemente, d. h. das Betätigungselement 16 befindet sich seitlich an der Maschine und ist dadurch gut einsehbar und zugänglich. Das Langloch 82 verläuft parallel zu dem Kurvenverlauf.

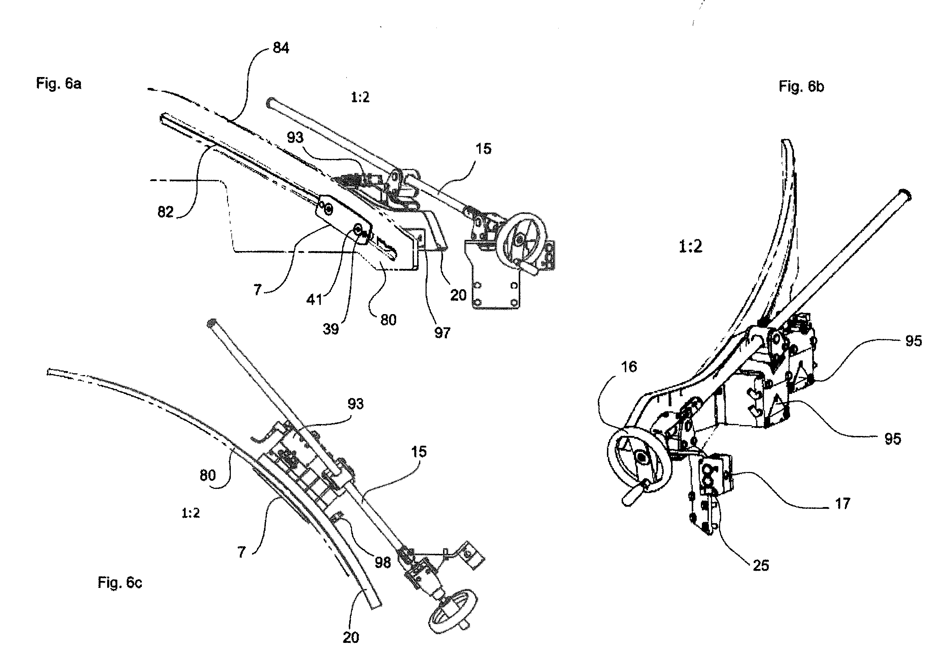

Die Fig. 6a-6c zeigen eine weitere Darstellung der erfindungsgemäßen Betätigungseinrichtung. Dabei erkennt man eine Klemmbacke 7, die mittels Schraubeinrichtungen 41 an dem Anlaufsegment 20 angeordnet ist und auf diese Weise eine Klemmung gegenüber der Halteeinrichtung 80 bewirkt. Das Bezugszeichen 39 kennzeichnet einen Bolzen. Das in Fig. 6c gezeigte Bezugszeichen 95 bezieht sich auf einen Klemmzylinder der zum Einfahren die Klemmbacke 7 gegen die Halteeinrichtung bzw. Fangkurve 80 zieht. Dieser Klemmzylinder sind dabei kolbenstangenseitig mit Tellerfedern vorgespannt und somit ist auch bei drucklosem Zustand ein selbstständiges Verstellen des Anlaufsegments 20 nicht möglich. In Betriebszustand der Maschine werden die Klemmzylinder 95 zusätzlich beaufschlagt und somit die endgültig benötigte Klemmkraft (Feder + Druckluft) erzeugt. An dem Anlaufsegment 20 sind Reibbeläge 97 angeordnet. Diese Reibbeläge vorzugsweise drei Reibbeläge verhindern ein Verschieben des Anlaufsegments 20 im Betriebszustand. Zum Lösen der Klemmung wird ein Taster 17 betätigt, ein Ventil beaufschlagt den Zylinder 95 kolbenseitig und die Klemmung wird gelöst. Dieses Ventil ist dabei mit dem Bezugszeichen 93 gekennzeichnet. Das Bezugszeichen 25 kennzeichnet einen Stellungsanzeiger, der eine Position des Handrads 16 anzeigt. Das Bezugszeichen 98 bezieht sich auf einen Schwingungssensor, mit dem die korrekte Einstellung des Anlaufsegments 20 im Betriebszustand überwacht wird. Falls die durch diesen Schwingungssensor gemessenen Schwingungen zu hoch sind, deutet dies auf ein zu unsanftes Aufsetzen der Kurvenrolle 24 auf das Anlaufsegment 20 hin.

Bei einer automatisierten Verstellung besteht die Möglichkeit, das Betätigungselement Handrad 16 durch einen Stellantrieb zu ersetzen. Dies kann dabei in die Steuerung der Maschine integriert werden und kann beim Sortenwechsel automatisch mit verstellt werden. Auf diese Weise könnten Fehler bei der Einstellung und somit Störungen oder Maschinenschäden vermieden werden.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 7: Klemmbacke
- 14: Antriebseinrichtung
- 15: Spindel
- 16: Betätigungselement, Handrad
- 17: Taster
- 20: Führungskurve, Anlaufsegment
- 20a,20b: Abschnitte
- 24: Führungsrolle
- 25: Stellungsanzeiger
- 39: Bolzen
- 41: Schraubeinrichtungen
- 80: Halteeinrichtung, Fangkurve
- 82: Langloch
- 84: Oberkante
- 93: Ventil
- 95: Klemmzylinder
- 96: Endabschnitt, Halteelement
- 97: Reibbeläge
- 100: Vorrichtung
- 104: Hohlraum
- 106: Blasrad
- 108: Blasstationen
- 112: Reckstange
- 116: Träger
- 120: Kunststoffvorformlinge
- 122: Zuführrad
- 130: Kunststoffbehältnisse
- 132: Abführrad, Reckschlitten
- D1: Dehnungsrichtung
- L: Längsrichtung
- L1: Längsrichtung des Behältnisses

## Patentansprüche

1. Vorrichtung (100) zum Umformen von Kunststoffvorformlingen (110) zu Kunststoffbehältnissen mit einer Vielzahl von Blasstationen (108), welche jeweils einen Hohlraum (104) aufweisen, in dem die Kunststoffvorformlinge zu Kunststoffbehältnissen umformbar sind, wobei diese Blasstationen (108) auf einem beweglichen Träger (106) angeordnet sind und jeweils eine Reckstange (112) aufweisen, welche die Kunststoffbehältnisse in deren Längsrichtung durch eine Bewegung in einer Dehnungsrichtung (D1) dehnt, wobei eine Antriebseinrichtung (14) zum Antrieb der Reckstange (112) in der Dehnungsrichtung (D1) vorgesehen ist,
**dadurch gekennzeichnet, dass**
die Vorrichtung (100) eine stationär angeordnete Führungskurve (20) aufweist, durch welche die Reckstange (112) in Abhängigkeit von einer Bewegung der Blasstation (8) entgegen der Dehnungsrichtung (D1) bewegbar ist, wobei wenigstens ein Abschnitt dieser Führungskurve (20) verstellbar ist, und bevorzugt durch diese Verstellung eine Abhängigkeit der Bewegung der Reckstange (112) entgegen der Dehnungsrichtung (D1) von der Bewegung der Blasstation (108) veränderbar ist.

2. Vorrichtung (100) nach Anspruch 1,
**dadurch gekennzeichnet, dass**
wenigstens eine Antriebseinrichtung (14) eine fluidbetätigte Antriebseinrichtung ist.

3. Vorrichtung (100) nach Anspruch 1,
**dadurch gekennzeichnet, dass**
wenigstens eine Antriebseinrichtung (14) einen Elektromotor aufweist.

4. Vorrichtung (100) nach Anspruch 1,
**dadurch gekennzeichnet, dass**
die Antriebseinrichtungen (14) wenigstens zweier Blasstationen (108) zumindest zeitweise in Fluidkommunikation miteinander stehen.

5. Vorrichtung (100) nach Anspruch 2,
**dadurch gekennzeichnet, dass**
die Vorrichtung (100) ein Reservoir für das Fluid zum Betätigen der Antriebseinrichtungen (14) aufweist und dieses Reservoir in Strömungsverbindung mit allen Antriebseinrichtungen (14) steht.

6. Vorrichtung (100) nach wenigstens einem der vorangegangenen Ansprüche,
**dadurch gekennzeichnet, dass**
die Vorrichtung (100) ein Betätigungselement (15, 16) zum Verstellen des Abschnitts der Führungskurve (20) aufweist und eine Bewegung dieses Betätigungselements (15, 16) an eine Bewegung des Abschnitts der Führungskurve (20) gekoppelt ist.

7. Vorrichtung (100) nach wenigstens einem der vorangegangenen Ansprüche,
**dadurch gekennzeichnet, dass**
die Führungskurve (20) an einer Halteeinrichtung (80) entlang eines vorgegebenen Verschiebeweges verschiebbar angeordnet ist.

8. Vorrichtung (100) nach Anspruch 5,
**dadurch gekennzeichnet, dass**
die Führungskurve (20) gegenüber der Halteeinrichtung (80) arretierbar ist.

9. Vorrichtung (100) nach wenigstens einem der vorangegangenen Ansprüche,
**dadurch gekennzeichnet, dass**
die Führungskurve entlang eines Bewegungspfades der Blasstationen (108) verstellbar ist.

10. Vorrichtung (100) nach wenigstens einem der vorangegangenen Ansprüche,
**dadurch gekennzeichnet, dass**
die Vorrichtung (100) eine Anzeigeeinrichtung aufweist, welche eine für eine Position der Führungskurve (20) charakteristische Information ausgibt.

11. Vorrichtung (100) nach Anspruch 5,
**dadurch gekennzeichnet, dass**
die Halteeinrichtung (80) eine weitere Führungskurve ist, welche wenigstens zeitweise zum Bewegen der Reckstange (112) dient.

12. Vorrichtung (100) nach Anspruch 6,
**dadurch gekennzeichnet, dass**
eine Arretierung der Führungskurve (20) gegenüber der Halteeinrichtung (80) durch eine Ventileinrichtung (95) gesteuert wird.

13. Vorrichtung (100) nach Anspruch 6,
**dadurch gekennzeichnet, dass**
die Führungskurve (20) gegenüber der Halteeinrichtung (80) vorgespannt ist.

14. Verfahren zum Betreiben einer Vorrichtung (100) zum Umformen von Kunststoffvorformlingen (110) zu Kunststoffbehältnissen mit einer Vielzahl von Blasstationen (108), welche jeweils einen Hohlraum (104) aufweisen, in dem die Kunststoffvorformlinge zu Kunststoffbehältnissen umgeformt werden, wobei diese Blasstationen (108) auf einem beweglichen Träger (106) angeordnet sind und jeweils eine Reckstange (112) aufweisen, welche die Kunststoffbehältnisse in deren Längsrichtung durch eine Bewegung in einer Dehnungsrichtung (D1) dehnt, und wobei die Reckstangen von einer Antriebseinrichtung (14) in der Dehnungsrichtung (D1) angetrieben werden, und wobei die Vorrichtung auf unterschiedliche Behältnisse umstellbar ist und bei einer Umstellung der Maschine zumindest eine Bodenform einer Blasstation, welche zum Erzeugen der Kunststoffbehältnisse dient, gegen eine andere Bodenform ausgewechselt wird
**dadurch gekennzeichnet, dass**
die Vorrichtung (100) eine stationär angeordnete Führungskurve (20) aufweist, durch welche die Reckstange (112) in Abhängigkeit von einer Bewegung der Blasstation (8) entgegen der Dehnungsrichtung (D1) bewegt wird und bei der Umstellung der Maschine diese Führungskurve verstellt wird.

15. Verfahren nach Anspruch 14,
**dadurch gekennzeichnet, dass**
die Führungskurve in Abhängigkeit von einer Höhe der Bodenform verstellt wird.
